# EUROPEAN PATENT APPLICATION

(11) **EP 4 807 422 A1**
(43) Date of publication of application: **16.09.2026**
(21) Application number: 24899460.0
(22) Date of filing: 11.10.2024
(51) Int. Cl.: G02B 7/02, G03B 17/12, G03B 30/00

(54) **OPTICAL LENS, LENS MODULE, AND ELECTRONIC DEVICE**

(30) Priority: 08.12.2023 CN 202311682772
(71) Applicant: Huawei Technologies Co., Ltd., Shenzhen, Guangdong 518129 (CN)
(72) Inventor: LIU, Mengran, Shenzhen, Guangdong 518129 (CN); FENG, Lei, Shenzhen, Guangdong 518129 (CN); CHEN, Hongfu, Shenzhen, Guangdong 518129 (CN); LIU, Jun, Shenzhen, Guangdong 518129 (CN)
(74) Representative: Isarpatent
(86) International application number: PCT/CN2024/124234
(87) International publication number: WO 2025/118816

(57) **Abstract**

This application provides an optical lens, a lens module, and an electronic device. The optical lens includes a lens barrel and a lens group. A first part of lenses in the lens group are located inside the lens barrel, at least a part of a second part of lenses in the lens group are located outside the lens barrel, and the second part of lenses include a lens with a largest size in the lens group. In this application, at least a part of the lens with the largest size in the optical lens is exposed without being surrounded by the lens barrel, so that a size of the lens barrel can be reduced, thereby reducing a size and a weight of the optical lens. In addition, a material of the lens barrel can be reduced, thereby reducing costs.

## Description

This application claims priority to Chinese Patent Application No. 202311682772.3, filed with the China National Intellectual Property Administration on December 8, 2023 and entitled "OPTICAL LENS, LENS MODULE, AND ELECTRONIC DEVICE", which is incorporated herein by reference in its entirety.

### TECHNICAL FIELD

This application relates to the field of image shooting technologies, and specifically, to an optical lens, a lens module, and an electronic device.

### BACKGROUND

As a demand for an amount of entering light in a lens module increases, an aperture and a format are increasingly larger. However, due to a limited overall size of a product, there is an increasing requirement for size compression of the lens module.

### SUMMARY

This application provides an optical lens, a lens module, and an electronic device, to reduce a size of the optical lens.

According to a first aspect, an optical lens is provided, including a lens barrel and a lens group. A first part of lenses in the lens group are located inside the lens barrel, at least a part of a second part of lenses in the lens group are located outside the lens barrel, and the second part of lenses includes a lens with a largest size in the lens group.

It should be understood that the optical lens in this embodiment of this application may be a fixed-focus lens, a zoom lens, a short-focus lens, a long-focus lens, a periscope lens, or the like. This is not limited in this application.

It should be noted that if the second part of lenses the lens group are one lens, "at least a part of a second part of lenses in the lens group are located outside the lens barrel" may be understood as follows: The second part of lenses in the lens group are completely exposed outside the lens barrel, or a part of the second part of lenses in the lens group are exposed outside the lens barrel, and another part of the second part of lenses in the lens group are accommodated inside the lens barrel. If the second part of lenses in the lens group are a plurality of lenses, "at least a part of a second part of lenses in the lens group are located outside the lens barrel" may be understood as follows: At least a part of a lens that is in the second part of lenses and that is connected to the lens barrel is located outside the lens barrel. In other words, a part of the lens that is in the second part of lenses and that is connected to the lens barrel is exposed outside the lens barrel, and another part of the lens that is in the second part of lenses and that is connected to the lens barrel is accommodated inside the lens barrel.

In this embodiment of this application, at least a part of the lens with the largest size in the optical lens is exposed without being surrounded by the lens barrel, so that a size of the lens barrel can be reduced, thereby reducing a size and a weight of the optical lens. In addition, a material of the lens barrel can be reduced, thereby reducing costs.

In a possible implementation, the second part of lenses in the lens group may be one lens.

For example, the second part of lenses include a first lens, the first lens is a lens that is closest to an image side and that is in the lens group or the first lens is a lens that is closest to an object side in the lens group, and the first lens is fastened to the lens barrel. It should be understood that, if the optical lens is mounted in a normal orientation, the first lens may be the lens that is closest to the image side and that is in the lens group. If the optical lens is mounted in an inverted orientation, the first lens may be the lens that is closest to the object side and that is in the lens group.

In this case, the first lens may be completely exposed outside the lens barrel, or a part of the first lens is exposed outside the lens barrel and another part of the first lens is accommodated inside the lens barrel.

It should be understood that the first lens is the lens with the largest size in the lens group. At least a part of the lens with the largest size in the optical lens is exposed without being surrounded by the lens barrel, so that the size of the optical lens can be reduced.

In some implementations, the first lens includes a first optical region and a first fastening region, the first optical region is a region through which a light ray passes, the first fastening region is located on an outer periphery of the first optical region, a first mating portion is disposed in the first fastening region, a first limiting portion is disposed on the lens barrel, and the first mating portion engages with the first limiting portion.

In this application, the first lens that is at least partially exposed outside the lens may be limited through an interlocking structure, so that the first lens may be limited relative to a preset position, thereby achieving optical alignment of a plurality of lenses in the lens group.

In some implementations, the first limiting portion includes a recess, the first mating portion includes a protrusion disposed toward the object side, and the protrusion of the first mating portion is accommodated in the recess of the first limiting portion; and/or the first limiting portion includes a protrusion disposed toward the object side, the first mating portion includes a recess, and the protrusion of the first limiting portion is accommodated in the recess of the first mating portion.

In some implementations, the first lens and the lens barrel may be connected to each other through laser bonding, adhesive bonding, solvent welding, or the like.

In another possible implementation, the second part of lenses in the lens group may be a plurality of lenses.

For example, the second part of lenses include a first lens and a second lens, the first lens is a lens that is closest to an image side and that is in the lens group or the first lens is a lens that is closest to an object side in the lens group, the second lens is adjacent to the first lens, the second lens is fastened to the lens barrel, and the first lens is fastened to the second lens. It should be understood that, if the optical lens is mounted in a normal orientation, the first lens may be the lens that is closest to the image side and that is in the lens group. If the optical lens is mounted in an inverted orientation, the first lens may be the lens that is closest to the object side and that is in the lens group. It should be further understood that the second lens is a lens adjacent to the first lens.

In this case, the first lens is completely exposed outside the lens barrel; and the second lens may be completely exposed outside the lens barrel, or a part of the second lens is exposed outside the lens barrel and another part of the second lens is accommodated inside the lens barrel.

It should be understood that the first lens and the second lens include the lens with the largest size. At least a part of the lens with the largest size in the optical lens is exposed without being surrounded by the lens barrel, so that a size of the optical lens can be reduced. In addition, a material of the lens barrel can be further reduced, thereby reducing costs.

In some implementations, the first lens includes a first optical region and a first fastening region, the first optical region is a region through which a light ray passes, the first fastening region is located on an outer periphery of the first optical region, and a first mating portion is disposed in the first fastening region; the second lens includes a second optical region and a second fastening region, the second optical region is a region through which a light ray passes, the second fastening region is located on an outer periphery of the second optical region, a second mating portion and a second limiting portion are disposed in the second fastening region, and the second limiting portion engages with the first mating portion; and a first limiting portion is disposed on the lens barrel, and the first limiting portion engages with the second mating portion.

In this application, there may be a plurality of exposed lenses, for example, the first lens and the second lens. In addition, limiting between the first lens and the second lens and between the first lens and the lens barrel may be achieved through an interlocking structure, so that the first lens and the second lens may be limited relative to preset positions, thereby achieving optical alignment of a plurality of lenses in the lens group.

In some implementations, through laser bonding, adhesive bonding, or solvent welding, the first lens and the second lens are connected to each other and the second lens and the lens barrel are connected to each other.

In some implementations, a shape of the lens in the lens group is circular, or a shape formed by cutting a circular lens through circular single-side edge cutting D-CUT, circular double-side edge cutting I-CUT, or circular square edge cutting S-CUT.

In some implementations, a shape of the lens barrel is circular, or a shape formed by cutting a circular lens barrel through circular single-side edge cutting D-CUT, circular double-side edge cutting I-CUT, or circular square edge cutting S-CUT.

According to a second aspect, an optical lens is provided, including a lens group. The lens group is not surrounded by a lens barrel, and the lens group includes at least a first lens and a second lens; the first lens includes a first optical region and a first fastening region, the first optical region is a region through which a light ray passes, the first fastening region is located on an outer periphery of the first optical region, and a first mating portion is disposed in the first fastening region; and the second lens includes a second optical region and a second fastening region, the second optical region is a region through which a light ray passes, the second fastening region is located on an outer periphery of the second optical region, a second limiting portion is disposed in the second fastening region, and the second limiting portion engages with the first mating portion.

In this embodiment of this application, the optical lens may use a structure without lens barrel surrounding. In other words, all lenses in the optical lens are exposed without being surrounded by the lens barrel, so that a size and a weight of the optical lens can be reduced. In addition, a material of the lens barrel can be reduced, thereby reducing costs.

With reference to the second aspect, in some implementations of the second aspect, the first mating portion includes a protrusion disposed toward an object side, the second limiting portion includes a recess, the protrusion of the first mating portion is accommodated in the recess of the second limiting portion; and/or the first mating portion includes a recess, the second limiting portion includes a protrusion disposed toward the object side, and the protrusion of the second limiting portion is accommodated in the recess of the first mating portion.

With reference to the second aspect, in some implementations of the second aspect, the first lens and the second lens are connected to each other through laser bonding, adhesive bonding, or solvent welding.

With reference to the second aspect, in some implementations of the second aspect, a shape of a lens in the lens group is circular, or a shape formed by cutting a circular lens through circular single-side edge cutting, circular double-side edge cutting, or circular square edge cutting.

According to a third aspect, a lens module is provided, including a motor and the optical lens according to any one of the implementations of the first aspect or the second aspect. The motor is configured to drive the optical lens to perform focusing and/or optical image stabilization.

It should be understood that the optical lens in this embodiment of this application may be a fixed-focus lens, a zoom lens, a short-focus lens, a long-focus lens, a periscope lens, or the like. This is not limited in this application.

With reference to the third aspect, in some implementations of the third aspect, the lens module further includes an image processor, and the image processor is configured to: obtain image data from the optical lens, and process the image data.

According to a fourth aspect, a lens module is provided. The lens module includes one or more lens groups, and the one or more lens groups include the optical lens according to any one of the implementations of the first aspect.

It should be understood that the optical lens in this embodiment of this application may be a fixed-focus lens, a zoom lens, a short-focus lens, a long-focus lens, a periscope lens, or the like. This is not limited in this application.

According to a fifth aspect, an electronic device is provided, including the lens module according to the third aspect or the fourth aspect.

For beneficial effects of the third aspect to the fifth aspect, refer to the beneficial effects of the first aspect. Details are not described herein again.

### BRIEF DESCRIPTION OF DRAWINGS

FIG. 1 is a diagram of an electronic device according to an embodiment of this application;
FIG. 2 is a diagram of an imaging principle according to an embodiment of this application;
FIG. 3 is a schematic cross-sectional view of an optical lens according to an embodiment of this application;
FIG. 4 is a diagram of a three-dimensional structure of an optical lens according to an embodiment of this application;
FIG. 5 is a schematic cross-sectional view of the optical lens shown in FIG. 4 according to an embodiment of this application;
FIG. 6A to FIG. 6D are schematic cross-sectional views of different interlocking structures according to an embodiment of this application;
FIG. 7A to FIG. 7C are diagrams of structures of lens edge cutting according to an embodiment of this application;
FIG. 8 is a diagram of a three-dimensional structure of another optical lens according to an embodiment of this application; and
FIG. 9 is a schematic cross-sectional view of the optical lens shown in FIG. 8 according to an embodiment of this application.

### DESCRIPTION OF EMBODIMENTS

The following describes technical solutions of this application with reference to accompanying drawings. It is clear that the described embodiments are merely some but not all of embodiments of this application.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that in the following embodiments of this application, "at least one" and "one or more" mean one, two, or more than two. The term "and/or" is used to describe an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner. The terms such as "first" and "second" are merely intended for a purpose of description, and shall not be understood as an indication or implication of relative importance or implicit indication of a quantity of indicated technical features. Therefore, a feature limited by "first", "second", or the like may explicitly or implicitly include one or more features.

In embodiments of this application, a same reference numeral indicates a same component or a same part. For a same part in embodiments of this application, only one part or component may be used as an example to mark a reference numeral in the figure. It should be understood that, for another same part or component, reference numerals are also applicable.

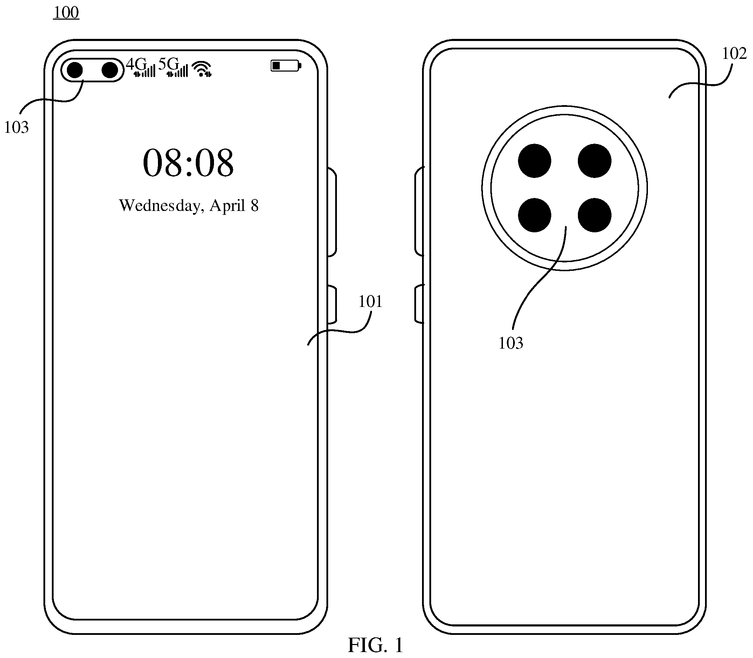

FIG. 1 is a diagram of a structure of an electronic device. The electronic device 100 may be a device with a camera or photographing function, for example, a cellular phone (cellular phone), a mobile phone, a smartphone (smartphone), a tablet computer, a notebook computer, a laptop computer (laptop computer), a video camera, a video recorder, a camera, a smart watch (smart watch), a smart wristband (smart wristband), or another form of device with a photographing or camera function. A specific form of the electronic device 100 is not specifically limited in this embodiment of this application. For ease of description and understanding, the following uses an example in which the electronic device 100 is a mobile phone for description.

As shown in FIG. 1, the electronic device 100 may include a display (display panel, DP) 101, a housing 102, a lens module (camera compact module, CCM) 103, and the like. Accommodation space is formed on the housing 102, and the display 101 and the lens module 103 are disposed in the accommodation space of the housing 102. The display 101 may be a liquid crystal display (liquid crystal display, LCD), an organic light-emitting diode (organic light-emitting diode, OLED) display, or the like. The OLED display may be a flexible display or a rigid display.

The lens module 103 may be disposed only on a front surface of the electronic device 100 to shoot a scene on a front side of the electronic device 100, and may be referred to as a front-facing lens module in some embodiments; or may be disposed only on a rear surface of the electronic device 100 to shoot a scene on a rear side of the electronic device 100, and may be referred to as a rear-facing lens module in some embodiments. Alternatively, lens modules 103 may be disposed on a front surface and a rear surface of the electronic device 100. As shown in FIG. 1, a lens module 103 is disposed on the front surface of the electronic device 100, and a lens module 103 is also disposed on the rear surface of the electronic device 100. In this way, both a scene on a front side of the electronic device 100 and a scene on a rear side of the electronic device 100 may be shot, provided that a corresponding lens module is used during image shooting.

It should be understood that a mounting position of the lens module 103 is merely an example. In some embodiments, when the lens module 103 is used as a front-facing lens module, the lens module 103 may be mounted at another position on the electronic device 100, for example, a left side of an earpiece, an upper middle position of the electronic device 100, a lower part of the electronic device 100, or four corners of the electronic device 100. When the lens module 103 is used as a rear-facing lens module, the lens module 103 may be mounted at an upper middle position or in an upper right corner of a rear surface of the electronic device 100. In some other embodiments, the lens module 103 may alternatively not be disposed on a body of the electronic device 100, but may be disposed on an edge protruding from the body of the electronic device 100, or may be disposed on a component movable or rotatable relative to the electronic device 100, for example, the component may extend, retract, rotate, or the like from the body of the electronic device 100. When the lens module 103 is rotatable relative to the electronic device 100, the lens module 103 is equivalent to a front-facing lens module and a rear-facing lens module. In other words, through rotation of the same lens module 103, both a scene on a front side of the electronic device 100 and a scene on a rear side of the electronic device 100 may be shot. In some other embodiments, when the display 101 is foldable, the lens module 103 may be used as a front-facing lens module, and may also be used as a rear-facing lens module. With folding of the display 101, the lens module 103 is configured to: shoot a scene on a front side of the electronic device 100, or shoot a scene on a rear side of the electronic device 100.

A quantity of disposed lens modules 103 is not limited in this embodiment of this application, and may be one, two, four, or more. For example, one or more lens modules 103 may be disposed on the front surface of the electronic device 100, and one or more lens modules 103 may be disposed on the rear surface of the electronic device 100. The quantity of disposed lens modules is not limited in this embodiment of this application, and relative positions of a plurality of disposed lens modules are not limited either. When a plurality of lens modules 103 are disposed, the plurality of lens modules 103 may be completely the same, or may be different. For example, optical parameters of the plurality of lens modules 103 are different.

Optionally, the electronic device 100 may further include a lens protection lens for protecting the lens module 103. The lens protection lens is disposed on the housing 102, and is configured to cover the lens module 103. When the lens protection lens is configured to protect a front-facing lens module, the lens protection lens may cover only the front-facing lens module or cover the entire front surface of the electronic device 100. When the lens protection lens covers the entire front surface of the electronic device 100, the lens protection lens may be configured to protect both the front-facing lens module and the display 101. In this case, the lens protection lens is cover glass (cover glass, CG). When the lens protection lens is configured to protect a rear-facing lens module, the lens protection lens may cover the entire rear surface of the electronic device 100 or may be disposed only at a position corresponding to the rear-facing lens module, and is configured to protect the rear-facing lens module. A material of the lens protection lens may be glass, sapphire, ceramic, or the like. This is not specially limited in this embodiment of this application. In some embodiments, the lens protection lens is transparent, so that a light ray outside the electronic device 100 can enter the lens module 103 through the lens protection lens.

It should be noted that the front surface of the electronic device 100 in this embodiment of this application may be understood as a surface of the electronic device 100 that faces a user when the user uses the electronic device 100, and the rear surface of the electronic device 100 may be understood as a surface of the electronic device 100 that faces away from the user when the user uses the electronic device 100.

It should be understood that the electronic device 100 shown in FIG. 1 is not limited to the foregoing components, and may further include another component, for example, a battery, a flash, a fingerprint recognition module, an earpiece, a button, and a sensor. In this embodiment of this application, a terminal in which the lens module 103 is mounted is used as an example for description. However, components mounted in the electronic device 100 are not limited thereto.

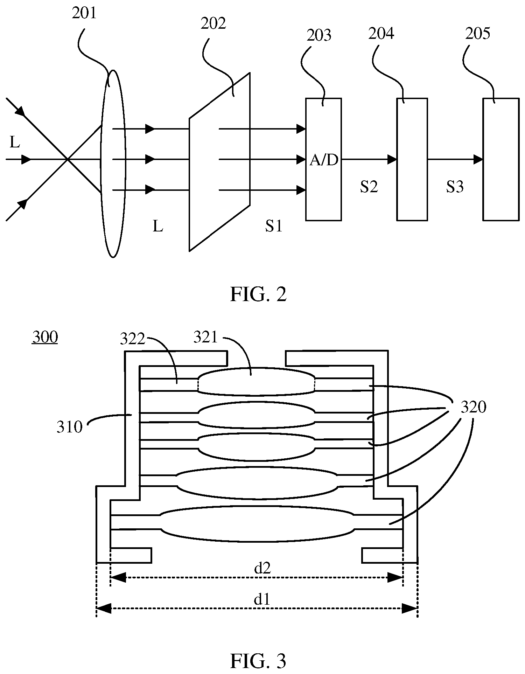

FIG. 2 is a diagram of an imaging principle. Light rays L reflected by a shot object generate an optical image through an optical lens (lens) 201, and the optical image is projected onto a surface of an image sensor (sensor) 202. The optical image is then converted into an electrical signal, namely, an analog image signal S1. The analog image signal S1 is converted into a digital image signal S2 by an analog-to-digital converter A/D (also referred to as an A/D converter) 203. The digital image signal S2 is processed by an image processor 204, for example, a digital signal processing (digital signal processing, DSP) chip, to form a compressed image signal S3. The compressed image signal S3 may be stored in a memory 205 for processing, and finally an image is displayed by a display or a display screen.

The optical lens 201 affects imaging quality and imaging performance. Light from a scene may form a clear image on a focusing plane through the optical lens 201, and the image of the object is recorded by a photosensitive material or a photosensitive device. The optical lens 201 may be an integrated assembly formed by combining one or more lenses. The lens may be a plastic (plastic) lens or a glass (glass) lens, may be a spherical lens or an aspheric lens, and may be a refractive lens or a reflective lens. The optical lens 201 in this embodiment of this application includes a superlens, and may perform phase modulation on incident light. For specific descriptions, refer to the following descriptions.

The image sensor 202 is a semiconductor chip, and a surface of the image sensor 202 includes photodiodes. When the image sensor 202 is irradiated by light, electric charges are generated, and are converted into a digital signal through an analog-to-digital converter chip. The image sensor 202 may be a charge-coupled device (charge-coupled device, CCD), or may be a complementary metal-oxide semiconductor (complementary metal-oxide semiconductor, CMOS) component. A charge-coupled device image sensor CCD is made of a high-photosensitivity semiconductor material, and can convert light rays into electric charges, and the electric charges are converted into a digital signal through the analog-to-digital converter chip. The CCD includes many photosensitive units, usually in a unit of megapixels. When a surface of the CCD is illuminated by light rays, each photosensitive unit reflects electric charges on a component. Signals generated by all the photosensitive units are combined to form a complete picture. A complementary metal-oxide semiconductor CMOS is mainly a semiconductor made of two elements, namely, silicon and germanium, so that an N-type (negatively charged) semiconductor and a P-type (positively charged) semiconductor coexist on the CMOS. A current generated by two types of complementary effect may be recorded and interpreted into an image by the processing chip. In some embodiments, the image sensor 202 may also be referred to as a photosensitive chip, a photosensitive element, or the like.

A function of the image processor 204 is to perform optimization processing on a digital image signal through a series of complex mathematical algorithm operations and finally transmit a processed signal to the display. The image processor 204 may be an image processing chip or a digital signal processing (DSP) chip. A function of the image processor 204 is to quickly transfer, to a central processing unit in a timely manner, data obtained by a photosensitive chip, and refresh the photosensitive chip. Therefore, quality of the DSP chip directly affects picture quality (for example, color saturation or definition).

It should be understood that the "lens" in this embodiment of this application should be understood as an entire lens, including one or more lenses.

FIG. 3 is a schematic cross-sectional view of an optical lens according to an embodiment of this application.

As shown in FIG. 3, the optical lens 300 may include a plurality of lenses (lenses) 320, a light shielding component (not shown in the figure) between the lenses, and a lens barrel 310 used as an outer enclosure. A simple stacking manner may be used between the plurality of lenses 320, and an interference-fit manner may be used between the lens 320 and the lens barrel 310. One end of the lens barrel 310 is provided with a light entry hole, and is configured to control an angle of view of the optical lens 300. The other end of the lens barrel 310 may be assembled with an automatic focusing drive component. The lens 320 may be a spherical lens or an aspheric lens. The automatic focusing drive component is configured to perform automatic focusing or optical image stabilization on the optical lens 300. The automatic focusing drive component may also be referred to as a motor. A method for implementing automatic focusing or optical image stabilization by using the automatic focusing drive component may be similar to that in the conventional technology. To avoid repetition, descriptions thereof are omitted herein.

The lens 320 may include an optical region 321 and a structure region 322. The optical region 321 is a region through which a light ray passes. The structure region 322 is mainly used for supporting, bearing, and the like, to reduce mechanical or environmental impact on the optical region 321. The lens 320 is accommodated inside the lens barrel 310, and the lens barrel 310 is used for protecting the lens 320 and blocking stray light. In other words, the lens barrel 310 is configured to support the lens 320, and the lens 320 may be fastened to the lens barrel 310. A connection manner is not limited. For example, the lens 320 may be connected to the lens barrel 310 through adhesive bonding.

In some embodiments, sizes of the plurality of lenses 320 may be different, and a size of a lens on a side away from the light entry hole may be greater than a size of a lens on a side close to the light entry hole.

It should be understood that a size of the optical lens 300 includes a size in a z direction in an optical axis direction and a size in an x/y direction perpendicular to the optical axis direction. The size in the z direction is determined by a total optical length, and the total optical length is determined by characteristics of the optical lens 300. The size of the optical lens 300 in the x direction or the y direction is d1. This application is intended to reduce the size of the optical lens 300 in the x/y direction, that is, reduce a length of d1.

Therefore, an embodiment of this application provides an optical lens, to reduce a size of the optical lens in an x direction or a y direction. It should be understood that the optical lens may be applied to a lens module and an electronic device.

The optical lens may include a lens barrel and a lens group. A first part of lenses in the lens group are located inside the lens barrel, at least a part of a second part of lenses in the lens group are located outside the lens barrel, and the second part of lenses include a lens with a largest size in the lens group.

It should be understood that the optical lens in this embodiment of this application may be a fixed-focus lens, a zoom lens, a short-focus lens, a long-focus lens, a periscope lens, or the like. This is not limited in this application.

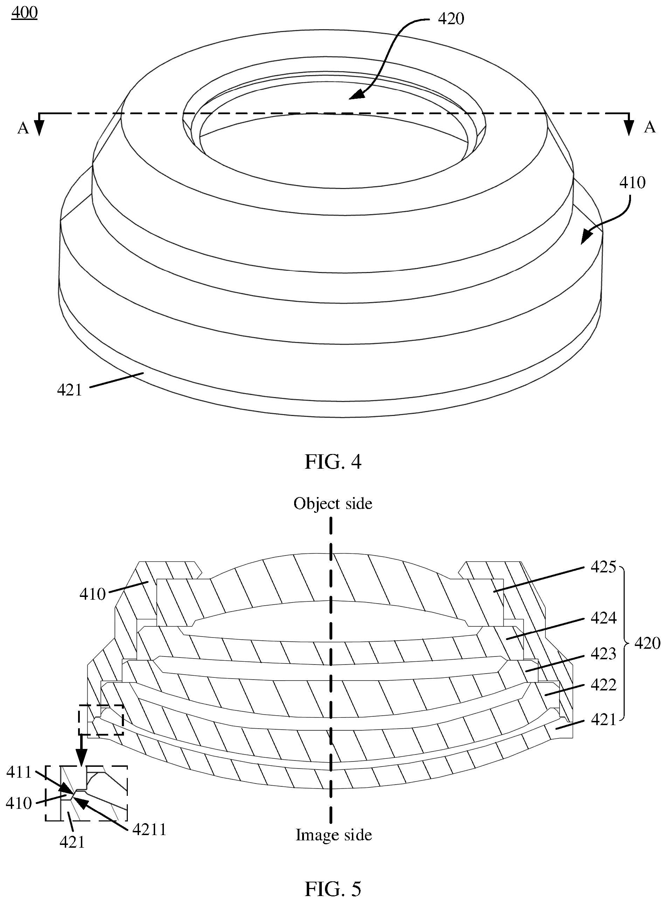

It should be noted that if the second part of lenses the lens group are one lens, "at least a part of a second part of lenses in the lens group are located outside the lens barrel" may be understood as follows: The second part of lenses in the lens group are completely exposed outside the lens barrel, or a part of the second part of lenses in the lens group are exposed outside the lens barrel, and another part of the second part of lenses in the lens group are accommodated inside the lens barrel. Content of this part is described in detail with reference to FIG. 4 and FIG. 5.

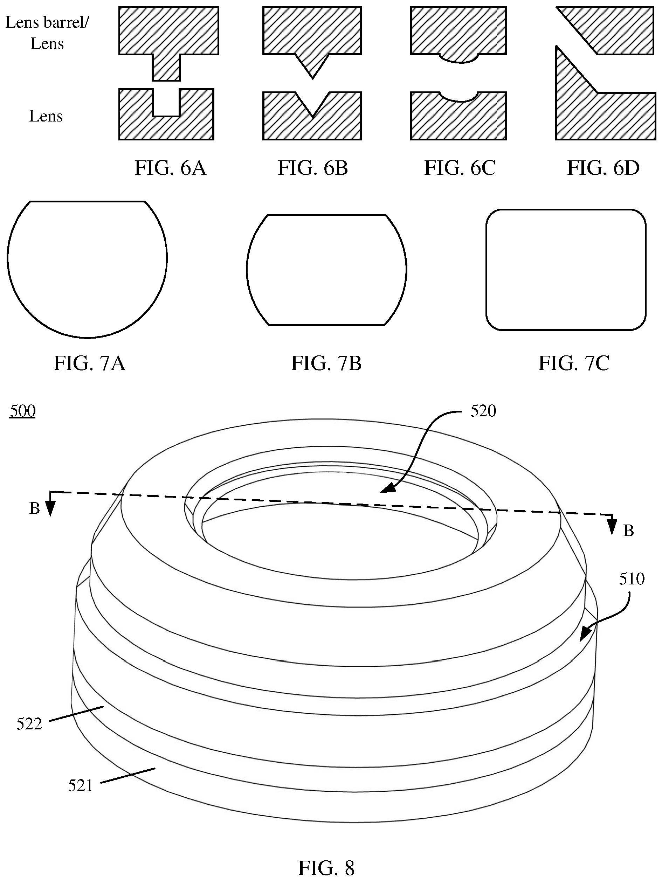

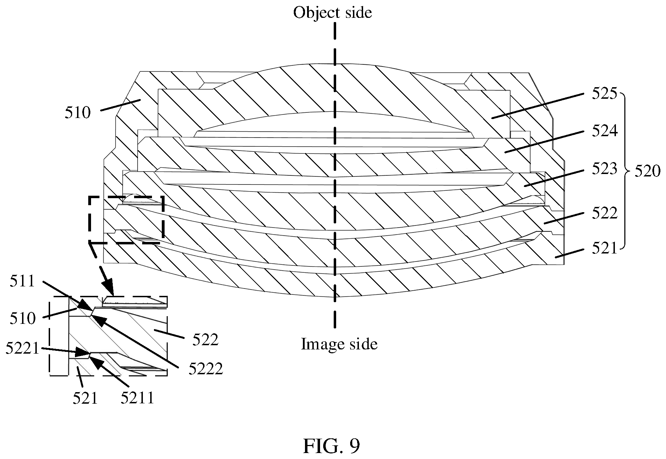

If the second part of lenses in the lens group are a plurality of lenses, "at least a part of a second part of lenses in the lens group are located outside the lens barrel" may be understood as follows: At least a part of a lens that is in the second part of lenses and that is connected to the lens barrel is located outside the lens barrel. In other words, a part of the lens that is in the second part of lenses and that is connected to the lens barrel is exposed outside the lens barrel, and another part of the lens that is in the second part of lenses and that is connected to the lens barrel is accommodated inside the lens barrel. Content of this part is described in detail with reference to FIG. 8 and FIG. 9.

FIG. 4 is a diagram of a structure of an optical lens 400 according to an embodiment of this application. A cross-sectional view of the optical lens 400 shown in FIG. 5 may be obtained by observing the optical lens 400 along an A-A cross section shown in FIG. 4. A dashed line in FIG. 5 shows an optical axis direction (which is briefly referred to as an optical axis below) of the optical lens 400. It should be understood that the optical axis may refer to a direction in which an optical system transmits a light ray, with reference to a chief ray of a center field of view. For a symmetric transmission system, an optical axis usually coincides with a rotation center line of the optical system. A side close to a shot object along the optical axis is an object side, and a side close to an image of the shot object along the optical axis is an image side.

With reference to FIG. 4 and FIG. 5, the optical lens 400 may include a lens barrel 410 and a lens group 420. The lens group 420 may include a plurality of lenses, and at least a part of lenses in the lens group 420 are accommodated in the lens barrel 410. For example, the lens group 420 may include a first lens 421, a second lens 422, a third lens 423, a fourth lens 424, and a fifth lens 425 that are sequentially arranged along the optical axis. The first lens 421 is close to the image side, and the fifth lens 425 is close to the object side. In other words, the first lens 421 is a lens that is closest to the image side and that is in the lens group 420, and the fifth lens 425 is a lens that is closest to the object side and that is in the lens group 420.

Sizes of the plurality of lenses included in the lens group 420 may be different. In some embodiments, if the optical lens is mounted in a normal orientation, sizes of the lenses may gradually increase from the object side to the image side. In other words, a size of the first lens 421 is greater than a size of another lens, and the first lens 421 is a lens with a largest size in the lens group 420. In some other embodiments, if the optical lens is mounted in an inverted orientation, sizes of the lenses may gradually decrease from the object side to the image side, and a lens with a largest size may be a lens that is closest to the object side and that is in the lens group.

In this embodiment of this application, as shown in FIG. 4, the lens with the largest size (for example, the first lens 421) may be completely exposed, and the first lens 421 is not surrounded by the lens barrel 410, so that a size of the optical lens 400 can be reduced. For example, refer to FIG. 3. A size of the optical lens 300 in an x/y direction is d1, and a size of the lens with the largest size in the x/y direction is d2. If the lens with the largest size is exposed without being surrounded by the lens barrel, the size of the optical lens 300 in the x/y direction may be reduced by a difference between d1 and d2. In addition, a weight and manufacturing costs of the optical lens 300 may be further reduced.

In other words, the optical lens 400 uses the structure shown in FIG. 4, and the first lens 421 with the largest size in the optical lens 400 is exposed without being surrounded by the lens barrel 410, so that a size and a weight of the lens barrel 410 can be reduced, and therefore the size and the weight of the optical lens 400 can be reduced. In addition, a material of the lens barrel 410 can be reduced, thereby reducing costs.

In some other embodiments, a part of the lens with the largest size (for example, the first lens 421) may be exposed. For example, a part of the first lens 421 is exposed outside the lens barrel 410, and another part of the first lens 421 is accommodated inside the lens barrel 410. In this embodiment, the size of the optical lens in the x direction or the y direction may be reduced in a targeted manner.

The plurality of lenses included in the lens group 420 may be classified into exposed lenses (for example, the first lens 421) and non-exposed lenses (for example, the second lens 422, the third lens 423, the fourth lens 424, or the fifth lens 425). It should be understood that, in this application, the non-exposed lenses may be referred to as a first part of lenses, and the exposed lenses may be referred to as a second part of lenses.

A plurality of lenses of the non-exposed lenses may be tightly fastened through the lens barrel 410, or may be fastened through an inter-lens interlocking structure. For example, a fixed connection manner may be bonding and fastening through an adhesive or the like.

The exposed lens (for example, the first lens 421) may be fastened to the lens barrel 410 in a laser bonding (laser bonding) manner. It should be understood that, in addition to laser bonding, a manner of the connection between the exposed lens (for example, the first lens 421) and the lens barrel 410 may further include adhesive bonding, solvent welding, and another welding connection manner. This is not limited in this application.

The exposed lens (for example, the first lens 421) may be limited relative to the lens barrel 410 through an interlocking structure. As shown in FIG. 5, the first lens 421 includes a first optical region and a first fastening region. The first optical region is a region through which a light ray passes. The first fastening region is located on an outer periphery of the first optical region. A first mating portion 4211 is disposed in the first fastening region. A first limiting portion 411 is disposed on the lens barrel 410. The first mating portion 4211 engages with the first limiting portion 411.

For example, the first limiting portion 411 is a recess, the first mating portion 4211 is a protrusion that is of the first lens 421 and that protrudes toward the object side, and the protrusion of the first mating portion 4211 is accommodated in the recess of the first limiting portion 411; and/or the first limiting portion 411 includes a protrusion disposed toward the object side, the first mating portion 4211 includes a recess, and the protrusion of the first limiting portion 411 is accommodated in the recess of the first mating portion 4211. The first lens 421 and the lens barrel 410 form a limiting structure through a recess and a protrusion, so that the first lens 421 and the lens barrel 410 are mutually limited, and structures of the first lens 421 and the lens barrel 410 are also simplified, thereby facilitating manufacturing of the first lens 421 and the lens barrel 410. In addition, limiting between the first lens 421 and the lens barrel 410 is achieved through the interlocking structure, so that the first lens 421 may be limited relative to a preset position, thereby achieving optical alignment of the plurality of lenses.

It should be understood that, in this embodiment of this application, a cross section of the interlocking structure between the first lens 421 and the lens barrel 410 is not limited, that is, cross section structures of the first limiting portion 411 and the first mating portion 4211 are not limited.

In an example, as shown in FIG. 6A, the first mating portion 4211 may be a square groove, and the first limiting portion 411 may be a square protrusion accommodated in the square groove.

In another example, as shown in FIG. 6B, the first mating portion 4211 may be a V-shaped groove, and the first limiting portion 411 may be a V-shaped protrusion accommodated in the V-shaped groove.

In still another example, as shown in FIG. 6C, the first mating portion 4211 may be an arc-shaped groove, and the first limiting portion 411 may be an arc-shaped protrusion accommodated in the arc-shaped groove.

In still another example, as shown in FIG. 6D, a cross section of the first limiting portion 411 may be a trapezoid, the first mating portion 4211 is provided with an inclined surface protruding toward an inclined surface of the trapezoid, and the inclined surface of the trapezoid engages with the inclined surface of the first mating portion 4211 for positional limiting.

In still another example, the first limiting portion 411 may include a first recess and a first protrusion, the first mating portion 4211 may include a second protrusion and a second recess, the second protrusion of the first mating portion 4211 is accommodated in the first recess of the first limiting portion 411, the first protrusion of the first limiting portion 411 is accommodated in the second recess of the first mating portion 4211, and the like.

It should be noted that the cross section of the interlocking structure between the first lens 421 and the lens barrel 410 may alternatively be in another shape. This is not limited in this application.

In some embodiments, a shape of the exposed lens (for example, the first lens 421) may be circular. In addition, the shape of the exposed lens (for example, the first lens 421) may alternatively be a shape obtained by performing lens edge cutting on a circular lens. For example, as shown in FIG. 7A to FIG. 7C, a shape of the first lens 421 may be a shape obtained by cutting a circular lens in a lens edge cutting manner, for example, circular single-side edge cutting D-CUT, circular double-side edge cutting I-CUT, or circular square edge cutting S-CUT. A lens shape shown in FIG. 7A is obtained by performing single-direction edge cutting (namely, D-CUT) on the circular lens, a lens shape shown in FIG. 7B is obtained by performing double-side edge cutting (namely, I-CUT) on the circular lens, and a lens shape shown in FIG. 7C is obtained by performing square edge cutting (namely, S-CUT) on the circular lens.

It should be noted that, in this embodiment of this application, lens edge cutting processing is performed on the circular lens, so that the size of the optical lens 400 in the x/y direction can be further reduced, thereby further reducing the weight and manufacturing costs of the optical lens 400.

It should be understood that a shape of another non-exposed lens in the lens group 420 is not limited in this embodiment of this application, and the shape of the non-exposed lens may be the same as or different from that of the first lens 421.

In some embodiments, a shape of the lens barrel 410 may be circular, or may be a shape formed by cutting a circular lens barrel in an edge cutting manner, for example, D-CUT, I-CUT, or S-CUT. This is not limited in this application.

Optionally, the plurality of lenses (for example, the first lens 421 to the fifth lens 425) in the lens group 420 may be glass lenses or plastic lenses. This is not limited in this application. In a possible example, the fifth lens 425 may be a glass lens, and the other lenses may be plastic lenses. Because the glass lens has a high refractive index, compared with a case in which all the lenses in the optical lens 400 use plastic lenses, using the glass lens for the fifth lens 425 helps reduce a thickness of the optical lens 400.

It should be understood that, in this embodiment of this application, in addition to the lens with the largest size (for example, the first lens 421), the exposed lenses may further include a plurality of lenses (≥2) in front of the first lens 421 or all lenses in front of the first lens 421. The front of the first lens 421 may be a side that is of the first lens 421 and that faces the object side. In other words, in this embodiment of this application, the optical lens may include one or more exposed lenses.

In a possible implementation, the lens included in the optical lens is completely exposed without being surrounded by a lens barrel. In this implementation, the optical lens may not include the lens barrel, but include only one or more lenses. In this implementation, the one or more lenses may be deeply fused with a motor, and the motor may be configured to drive a lens group to perform focusing and/or optical image stabilization.

For example, the optical lens may include the lens group, the lens group is not surrounded by the lens barrel, and the lens group includes at least a first lens and a second lens. The first lens includes a first optical region and a first fastening region, the first optical region is a region through which a light ray passes, the first fastening region is located on an outer periphery of the first optical region, and a first mating portion is disposed in the first fastening region. The second lens includes a second optical region and a second fastening region. The second optical region is a region through which a light ray passes, the second fastening region is located on an outer periphery of the second optical region, a second limiting portion is disposed in the second fastening region, and the second limiting portion engages with the first mating portion. It should be understood that, if the optical lens uses a lens barrel-free structure, limiting between lenses in the lens group included in the optical lens may be achieved through an interlocking structure. A cross section of the interlocking structure may be rectangular, V-shaped, circular-arc-shaped, trapezoidal, or the like. For details, refer to FIG. 6A to FIG. 6D. Details are not described herein again.

For example, the first mating portion includes a protrusion disposed toward the object side, the second limiting portion includes a recess, and the protrusion of the first mating portion is accommodated in the recess of the second limiting portion; and/or the first mating portion includes a recess, the second limiting portion includes a protrusion disposed toward the object side, and the protrusion of the second limiting portion is accommodated in the recess of the first mating portion.

For example, the first lens and the second lens may be connected to each other through laser bonding, adhesive bonding, solvent welding, or the like.

For example, a shape of the lens in the lens group is circular, or a shape formed by cutting a circular lens through circular single-side edge cutting, circular double-side edge cutting, or circular square edge cutting. For the shape of the lens, refer to FIG. 7A to FIG. 7C.

In another possible implementation, there may be one exposed lens of the optical lens. As shown in FIG. 4 and FIG. 5, the exposed lens is a first lens 421, and the first lens 421 is a lens with a largest size in the lenses of the optical lens.

In still another possible implementation, the optical lens may include a plurality of (for example, two) exposed lenses, and the plurality of exposed lenses include a lens with a largest size. This implementation is described in detail with reference to FIG. 8 and FIG. 9.

FIG. 8 is a diagram of a structure of another optical lens 500 according to an embodiment of this application. A cross-sectional view of the optical lens 500 shown in FIG. 9 may be obtained by observing the optical lens 500 along a B-B cross section shown in FIG. 8. A dashed line in FIG. 9 shows an optical axis direction of the optical lens 500.

With reference to FIG. 8 and FIG. 9, the optical lens 500 may include a lens barrel 510 and a lens group 520. The lens group 520 may include a plurality of lenses, and at least a part of lenses in the lens group 520 are accommodated in the lens barrel 510. For example, the lens group 520 may include a first lens 521, a second lens 522, a third lens 523, a fourth lens 524, and a fifth lens 525 that are sequentially arranged along an optical axis. The first lens 521 is close to an image side, and the fifth lens 525 is close to an object side. In other words, the first lens 521 is a lens that is closest to the image side and that is in the lens group 520, and the fifth lens 525 is a lens that is closest to the object side and that is in the lens group 520.

In some other embodiments, if the optical lens is mounted in an inverted orientation, sizes of the lenses may gradually decrease from an object side to an image side, and a lens with a largest size may be a lens that is closest to the object side and that is in the lens group. In other words, the first lens 521 may be a lens that is closest to the object side and that is in the lens group 520, and the fifth lens 525 is a lens that is closest to the image side and that is in the lens group 520.

It should be understood that the first lens 521 and the second lens 522 may be completely exposed without being surrounded by the lens barrel 510. The first lens 521 and the second lens 522 include the lens with the largest size. In other words, in the optical lens 500, a plurality of lenses (for example, the first lens 521 and the second lens 522) are exposed without being surrounded by the lens barrel 510, and the plurality of lenses include the lens with the largest size, so that a size and a weight of the optical lens 500 can be reduced. In addition, a material of the lens barrel 510 can be further reduced, thereby reducing costs.

In some other embodiments, the first lens 521 may be completely exposed outside the lens barrel 510, a part of the second lens 522 is exposed outside the lens barrel 510, and another part of the second lens 522 is accommodated inside the lens barrel 510. It should be understood that the first lens 521 and the second lens 522 include the lens with the largest size. At least a part of the lens with the largest size in the optical lens is exposed without being surrounded by the lens barrel, so that a size and a weight of the optical lens can be reduced. In addition, a material of the lens barrel can be further reduced, thereby reducing costs.

The plurality of lenses included in the lens group 520 may be classified into exposed lenses (for example, the first lens 521 and the second lens 522) and non-exposed lenses (for example, the third lens 523, the fourth lens 524, or the fifth lens 525). It should be understood that, in this application, the non-exposed lenses may be referred to as a first part of lenses, and the exposed lenses may be referred to as a second part of lenses.

A plurality of lenses of the non-exposed lenses may be tightly fastened through the lens barrel 510, or may be fastened through an inter-lens interlocking structure. For example, a fixed connection manner may be bonding and fastening through an adhesive or the like.

Fixed connections between the exposed lens and the lens barrel 510 and between the exposed lenses may be achieved through laser bonding. For example, fixed connections between the first lens 521 and the second lens 522 and between the second lens 522 and the lens barrel 510 may be achieved through laser bonding.

It should be understood that, in addition to laser bonding (laser bonding), manners of the connections between the exposed lens and the lens barrel 510 and between the exposed lenses further include adhesive bonding, solvent welding, and another welding connection manner. This is not limited in this application.

Limiting between the exposed lens and the lens barrel 510 and between the exposed lenses may be achieved through an interlocking structure. In other words, limiting between the first lens 521 and the second lens 522 may be achieved through an interlocking structure, and limiting between the second lens 522 and the lens barrel 510 may also be achieved through the interlocking structure. Cross sections of interlocking structures between components may include a rectangular cross section, a V-shaped cross section, a circular-arc-shaped cross section, a trapezoidal cross section, and the like. For details, refer to FIG. 6A to FIG. 6D. Details are not described herein again.

For example, as shown in FIG. 9, the first lens 521 includes a first optical region and a first fastening region. The first optical region is a region through which a light ray passes, the first fastening region is located on an outer periphery of the first optical region, and a first mating portion 5211 is disposed in the first fastening region. The second lens 522 includes a second optical region and a second fastening region. The second optical region is a region through which a light ray passes, the second fastening region is located on an outer periphery of the second optical region, a second mating portion 5222 and a second limiting portion 5221 are disposed in the second fastening region, and the second limiting portion 5221 engages with the first mating portion 5211. A first limiting portion 511 is disposed on the lens barrel 510, and the first limiting portion 511 engages with the second mating portion 5222. In other words, the first mating portion 5211 is disposed on the first lens 521, the second limiting portion 5221 and the second mating portion 5222 are disposed on the second lens 522, the first limiting portion 511 is disposed on the lens barrel 510, the first mating portion 5211 engages with the second limiting portion 5221, and the second mating portion 5222 engages with the first limiting portion 511.

For example, the second limiting portion 5221 is a recess, the first mating portion 5211 is a protrusion that is of the first lens 521 and that protrudes toward the object side, and the first mating portion 5211 is accommodated in the second limiting portion 5221. The first limiting portion 511 is a recess, the second mating portion 5222 is a protrusion that is of the second lens 522 and that protrudes toward the object side, and the second mating portion 5222 is accommodated in the first limiting portion 511. The first lens 521 and the second lens 522 form a limiting structure through a recess and a protrusion, and the second lens 522 and the lens barrel 510 form a limiting structure through a recess and a protrusion, so that the first lens 521 and the second lens 522 are mutually limited and the second lens 522 and the lens barrel 510 are mutually limited, and structures of the first lens 521, the second lens 522, and the lens barrel 510 are also simplified, thereby facilitating manufacturing of the first lens 521, the second lens 522, and the lens barrel 510. In addition, limiting between the first lens 521 and the second lens 522 and between the first lens 522 and the lens barrel 510 is achieved through an interlocking structure, so that the first lens 521 and the second lens 522 may be limited to preset positions, thereby achieving optical alignment of the plurality of lenses.

It should be noted that shapes of the lens barrel 510, the first lens 521, and the second lens 522 may be circular, or may be shapes formed by cutting circular lenses in an edge cutting manner, for example, D-CUT, I-CUT, or S-CUT. For details, refer to FIG. 7A to FIG. 7C. This is not limited in this application.

It should be understood that the optical lens 400 may be a fixed-focus lens, a zoom lens, a short-focus lens, a long-focus lens, a periscope lens, or the like; or the optical lens 500 may be a fixed-focus lens, a zoom lens, a short-focus lens, a long-focus lens, a periscope lens, or the like; or the optical lens 400 and the optical lens 500 may be fixed-focus lenses, zoom lenses, short-focus lenses, long-focus lenses, periscope lenses, or the like. This is not limited in this application.

In some embodiments, if the optical lens includes a plurality of lens groups, one or more of the plurality of lens groups may use the structure shown in FIG. 4 or FIG. 8. In other words, at least one of the plurality of lens groups may reduce a size of a lens barrel through lens exposure, so that a size and a weight of the optical lens can be reduced. In addition, a material of the lens barrel can be reduced, thereby reducing costs.

For example, each of the plurality of lens groups may include a lens barrel, a protrusion portion is disposed on an outer periphery of the lens barrel, and the protrusion portion on the lens barrel may be connected to a guide rod, to implement optical axis alignment, so that when a lens group in the plurality of lens groups moves, the plurality of lens groups are optically aligned.

It should be understood that the optical lens in this embodiment may be applied to the lens module 103 shown in FIG. 1, or may be applied to the electronic device 100 shown in FIG. 1. This is not limited in this application.

In addition, an embodiment of this application further provides a lens module. The lens module may include the optical lens shown in FIG. 4 or FIG. 8 and a motor. The motor is configured to drive the optical lens to perform focusing and/or optical image stabilization.

In some embodiments, the lens module may further include an image sensor, and the image processor is configured to: obtain image data from the optical lens and process the image data.

In some embodiments, the lens module may further include elements such as an infrared filter, a circuit board, and a gyroscope. For example, the infrared filter may eliminate an unnecessary light ray projected onto the image sensor, and prevent the image sensor from generating false colors or ripples, to improve an effective resolution and color reproduction of the image sensor. The circuit board may be a flexible printed circuit (flexible printed circuit, FPC) or a printed circuit board (printed circuit board, PCB), and is configured to transmit an electrical signal.

It should be understood that the optical lens 400 and the optical lens 500 provided in embodiments of this application may be applied to the lens module 103 shown in FIG. 1, or may be applied to the electronic device 100 shown in FIG. 1. This is not limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical lens, comprising a lens barrel and a lens group, wherein a first part of lenses in the lens group are located inside the lens barrel, at least a part of a second part of lenses in the lens group are located outside the lens barrel, and the second part of lenses comprise a lens with a largest size in the lens group.

2. The optical lens according to claim 1, wherein the second part of lenses comprise a first lens, the first lens is a lens that is closest to an image side and that is in the lens group or the first lens is a lens that is closest to an object side in the lens group, and the first lens is fastened to the lens barrel.

3. The optical lens according to claim 2, wherein the first lens comprises a first optical region and a first fastening region, the first optical region is a region through which a light ray passes, the first fastening region is located on an outer periphery of the first optical region, a first mating portion is disposed in the first fastening region, a first limiting portion is disposed on the lens barrel, and the first mating portion engages with the first limiting portion.

4. The optical lens according to claim 3, wherein the first limiting portion comprises a recess, the first mating portion comprises a protrusion disposed toward the object side, and the protrusion of the first mating portion is accommodated in the recess of the first limiting portion; and/or the first limiting portion comprises a protrusion disposed toward the object side, the first mating portion comprises a recess, and the protrusion of the first limiting portion is accommodated in the recess of the first mating portion.

5. The optical lens according to any one of claims 2 to 4, wherein the first lens is completely exposed outside the lens barrel, or a part of the first lens is exposed outside the lens barrel and another part of the first lens is accommodated inside the lens barrel.

6. The optical lens according to any one of claims 2 to 5, wherein the first lens is connected to the lens barrel through laser bonding, adhesive bonding, or solvent welding.

7. The optical lens according to claim 1, wherein the second part of lenses comprise a first lens and a second lens, the first lens is a lens that is closest to an image side and that is in the lens group or the first lens is a lens that is closest to an object side and that is in the lens group, the second lens is adjacent to the first lens, the second lens is fastened to the lens barrel, and the first lens is fastened to the second lens.

8. The optical lens according to claim 7, wherein the first lens comprises a first optical region and a first fastening region, the first optical region is a region through which a light ray passes, the first fastening region is located on an outer periphery of the first optical region, and a first mating portion is disposed in the first fastening region;
the second lens comprises a second optical region and a second fastening region, the second optical region is a region through which a light ray passes, the second fastening region is located on an outer periphery of the second optical region, a second mating portion and a second limiting portion are disposed in the second fastening region, and the second limiting portion engages with the first mating portion; and
a first limiting portion is disposed on the lens barrel, and the first limiting portion engages with the second mating portion.

9. The optical lens according to claim 7 or 8, wherein the first lens is completely exposed outside the lens barrel; and the second lens is completely exposed outside the lens barrel, or a part of the second lens is exposed outside the lens barrel and another part of the second lens is accommodated inside the lens barrel.

10. The optical lens according to any one of claims 7 to 9, wherein the first lens and the second lens are connected to each other and the second lens and the lens barrel are connected to each other, through laser bonding, adhesive bonding, or solvent welding.

11. The optical lens according to any one of claims 1 to 10, wherein a shape of a lens in the lens group is circular, or a shape formed by cutting a circular lens through circular single-side edge cutting, circular double-side edge cutting, or circular square edge cutting.

12. The optical lens according to any one of claims 1 to 11, wherein a shape of the lens barrel is circular, or a shape formed by cutting a circular lens barrel through circular single-side edge cutting, circular double-side edge cutting, or circular square edge cutting.

13. An optical lens, comprising a lens group, wherein the lens group is not surrounded by a lens barrel, and the lens group comprises at least a first lens and a second lens;
the first lens comprises a first optical region and a first fastening region, the first optical region is a region through which a light ray passes, the first fastening region is located on an outer periphery of the first optical region, and a first mating portion is disposed in the first fastening region; and
the second lens comprises a second optical region and a second fastening region, the second optical region is a region through which a light ray passes, the second fastening region is located on an outer periphery of the second optical region, a second limiting portion is disposed in the second fastening region, and the second limiting portion engages with the first mating portion.

14. The optical lens according to claim 13, wherein the first mating portion comprises a protrusion disposed toward an object side, the second limiting portion comprises a recess, and the protrusion of the first mating portion is accommodated in the recess of the second limiting portion; and/or the first mating portion comprises a recess, the second limiting portion comprises a protrusion disposed toward the object side, and the protrusion of the second limiting portion is accommodated in the recess of the first mating portion.

15. The optical lens according to claim 13 or 14, wherein the first lens and the second lens are connected to each other through laser bonding, adhesive bonding, or solvent welding.

16. The optical lens according to any one of claims 13 to 15, wherein a shape of a lens in the lens group is circular, or a shape formed by cutting a circular lens through circular single-side edge cutting, circular double-side edge cutting, or circular square edge cutting.

17. A lens module, comprising a motor and the optical lens according to any one of claims 1 to 16, wherein the motor is configured to drive the optical lens to perform focusing and/or optical image stabilization.

18. The lens module according to claim 17, wherein the lens module further comprises an image processor, and the image processor is configured to: obtain image data from the optical lens and process the image data.

19. A lens module, comprising one or more lens groups, wherein the one or more lens groups comprise the optical lens according to any one of claims 1 to 16.

20. An electronic device, comprising the lens module according to any one of claims 17 to 19.
